# EUROPEAN PATENT APPLICATION

(11) **EP 1 520 866 A1**
(43) Date of publication of application: **06.04.2005**
(21) Application number: 04023075.7
(22) Date of filing: 28.09.2004
(51) Int. Cl.: C08G 18/10, C08K 7/14, B32B 17/04, B32B 27/04, B32B 27/40, B63B 5/24

(54) **Composite articles having an aesthetic visual surface for use in aqueous environments, and compositions suitable for the preparation thereof**

(30) Priority: 01.10.2003 US 507790 P
(71) Applicant: TSE INDUSTRIES, INC., Clearwater, Florida 33760 (US)
(72) Inventor: Reichel, Curtis J., Tampa, Florida 33625 (US); Raday, Robert M., Landolakes, Florida 34639 (US)
(74) Representative: Rupprecht, Kay, Dipl.-Ing.

(57) **Abstract**

Highly damage resistant fiber reinforced composites are prepared from polyurethane systems employing a highly hydrophobic polyol component and an isocyanate prepolymer, the combination having a combined functionality greater than 5. The polyurethane systems may be used for gel coats and matrix resins, and produce substantially no volatile emissions. The systems are particularly useful for boat hulls and like products.

## Description

### BACKGROUND OF THE INVENTION

### 1. Field of the Invention

The subject invention pertains to fiber reinforced articles having an aesthetic visual surface, for use in aqueous environments such as pleasure craft hulls, personal watercraft, sea plane pontoons, hot tubs, swimming pools, and the like.

### 2. Background Art

Pleasure craft hulls have been made predominately of fiberglass reinforced curable polyester since at least the 1960's. More recently, personal watercraft, hot tubs, and similar items have also been crafted from these materials. Both the fiberglass reinforcement as well as the curable polyester generally used are relatively inexpensive materials, and methods of use of these materials are now well developed.

The construction of watercraft hulls and other fiberglass reinforced articles is a multistep process. In general, a female mold is created with a surface of the class desired for the article. In general this surface is quite smooth and "shiny," although textured surfaces may be used for some applications. The mold is coated with a release coating such as a silicone, wax, etc., and a relatively thick "gel coat" is sprayed onto the mold surface. The get coat is generally pigmented to be of the final desired color of the article, e.g. hull, and is also generally devoid of fibrous reinforcement.

Following application of the gel coat, the structural fiberglass composite body is constructed, generally of several layers. A diverse variety of individual construction techniques may be used, as well as many types of fibrous reinforcement. The majority of the reinforcement comprises glass fibers, in the form of chopped fibers, felted mat, woven cloth, unidirectional tape, etc. Certain portions of a hull or other structure may include reinforcement of a type different from others. For example where greater stress or bending loads are expected, such areas may include a larger quantity of woven or even unidirectional tape products. In addition to fiberglass, other fibers such as polyaramid, carbon ("graphite"), high density polyolefin, and the like may be used. However, fiberglass is used for the most part due to cost considerations.

In a typical structural layup, a layer of curable polyester is applied over the gel coat, followed by a layer of fiberglass mat, which is hand rolled to insure complete wet-out and to eliminate trapped air bubbles. Further resin and mat are applied and these steps repeated, followed by spraying a mixture of chopped fiberglass and resin. The last layer is generally a neat resin layer to provide an adequate surface appearance and ensure coverage of exposed fibers. The composite layup is then allowed to cure, and finally, demolded. Hulls made by this method may range from relatively thin hulls useful in personal watercraft to hulls several inches thick.

The curable polyester resins employed are mixtures of unsaturated polyester resins and free styrene monomer. Incorporation of an addition catalyst such as a peroxide, peroxyester, peroxyketone, etc., causes these resins to crosslink and cure. Unsaturated polyesters are used for both the gel coat and the matrix resin for the fiber reinforced structure, although the compositions are generally somewhat different. The polyester used in the gel coat may contain residues of isophthalic acid, for example, which is absent or only present in minor amounts in the matrix resin.

The unsaturated polyester resins possess several disadvantages, however. First, styrene monomer has, in general, been a necessary component of these resins, particularly the matrix resin. Styrene is volatile and toxicologically suspect. Due to the large surface area of boat hulls, fiber-reinforced swimming pools, and the like, considerably styrene escapes into the manufacturing surroundings, where it must be vented to the atmosphere or burned. In some cases, styrene emissions may exceed statutory cumulative limits, forcing manufacturers to cease production for various periods of time, or to slow production rates.

The properties of the polyester matrix resin-based products are also in need of improvement. Gel coats prepared from polyester are prone to cosmetic damage, particularly chipping, while the fiberglass reinforced underlying structure is prone to cracking, delamination, and other damage, particularly in the case of sharp impact. These damage modes are generally elevated as the structures age due to the repeated stresses they experience over their useful lifetime.

In aqueous environments, the aforementioned problems may be exacerbated, as a relatively high equilibrium water content is rapidly achieved, since in some cases, the structures are literally surrounded on all sides by water. Water may act as a matrix resin plasticizer, and may cause hydrolytic damage to the polyester base resin.

It would be desirable to provide resin systems for use as gel coats and composite structure matrix resins which exhibit little or no emissions, and produce structures and aesthetic surfaces less prone to damage than their unsaturated polyester resin counterparts. It would further be desirable to provide resin systems which exhibit highly hydrophobic character, in order to minimize absorption of water when used in aqueous environments.

### SUMMARY OF THE INVENTION

It has now been surprisingly discovered that two component polyurethane systems employing highly hydrophobic polyol components are capable of producing gel coats and fiber reinforced structural composites which exhibit exceptional resistance to impact damage. At the same time, the cured systems are highly hydrophobic, and thus resist permeation by water. The systems can be employed with substantially no emissions during layup and cure.

### DETAILED DESCRIPTION OF THE PREFERRED EMBODIMENT(S)

The composite structures of the present invention are useful in aqueous environments, i.e. those environments where prolonged exposure to liquid water is contemplated. The articles may comprise a gel coat of the subject invention with a conventional matrix resin; a conventional gel coat with a subject invention matrix resin, and preferably, a subject invention gel coat and subject invention matrix resin.

The gel coats and the matrix resins of the present invention are at least two component polyurethane systems which both preferably employ a high proportion of at least one highly hydrophobic polyol. The systems are highly crosslinked, having a minimal combined functionality of 5.5 as hereafter defined. While the gel coat and matrix resin may in principle contain the same general components, commercially they are crafted somewhat differently so as to offer the greatest cost effectiveness. Each is on at least two part system comprising an isocyanate-reactive composition termed the "resin side" and an isocyanate-functional composition termed the isocyanate or "iso" side. Two part systems are preferred.

It is necessary for the aliphatic gel coat, and highly desirable for the matrix resin structural layer(s), to be highly hydrophobic. As indicated, this high degree of hydrophobicity is advantageously obtained by utilizing a resin(polyol) side which is highly hydrophobic and an isocyanate side which is also hydrophobic. Because the hydrophobicity of the resulting cured polymers will be a composite of the properties of the reactive components, it is possible to include somewhat less hydrophobic polyols in the resin side, e.g. polyoxypropylene triols, provided that the isocyanate side contains sufficient hydrophobic polyol-derived isocyanate-terminated prepolymer to impart the desired degree of overall hydrophobicity. The reverse is also true, i.e. the isocyanate component may be less hydrophobic if the resin side has higher hydrophobicity. For some applications, lesser degrees of hydrophobicity may be suitable. Hydrophobicity of a surface may be assessed conventionally by water beading tests or water absorbtion tests.

The gel coat polyurethane system is a substantially aliphatic system comprising minimally one hydrophobic aliphatic polyol, optionally and preferably a low molecular weight aliphatic crosslinker, and an aliphatic isocyanate prepolymer. Polyurethanes prepared from aromatic isocyanates are known to weather poorly, particularly in the presence of sunlight. Thus, the isocyanate component should be substantially aliphatic. Importantly, the NCO index of the formulation should be less than 109, preferably in the range of 95 to 108, more preferably 100 to 107, and most preferably 104-107.

By the term "aliphatic polyol" is meant a "polyol" which is hydroxyl, amino, or hydroxyl and amino functional, and which contains substantially aliphatic or cycloaliphatic residues. Other isocyanate reactive functionalities may be present, but are not preferred. The polyol may contain up to 30 mol percent, preferably less than 20 mol percent, yet more preferably less than 10 mol percent, and particularly less than 5 mol percent of aromatic moieties. Any aromatic moieties present are preferably linked within the polyol by ester, carbonate, sulfone, or amide linkages. If urethane or urea linkages are present, these are preferably derived from aliphatic or cycloaliphatic isocyanates and not aryl isocyanates where the isocyanate group is attached directly to the aryl ring. Thus amino or hydroxyl-terminated polyethers, polyamides, polyesters, hydroxyl-functional glycerol esters, and the like are all considered to be aliphatic polyols provided that the aromatic residue content is less than 30 mol percent. Polyether polyols and glycerol, polyglycerol, sorbitan, etc. polyesters of aliphatic, hydroxyl-functional carboxylic acids are preferred substantially aliphatic polyols.

The hydrophobic polyol is preferably a hydrocarbonoxy polyol having a functionality of about 2.5 or more, optionally containing nitrogen in addition to hydrogen, carbon, and oxygen. The hydrophobic polyol must have a carbon/oxygen (mol) ratio greater than 4:1, more preferably greater than 5:1, yet more preferably greater than 7:1, and most preferably in the range of 8:1 1 to 20:1. The hydrophobic "polyol" may also be amino-functional, or may have a combination of hydroxyl and amino functionality. Thus, the final product is generally a polyurethane, but may also be a polyurethaneurea or a polyurea. All of these are considered "polyurethanes" for the purposes of this invention, unless the terms "polyurethaneurea" or "polyurea" are specifically used.

The preferred hydrophobic polyol is castor oil or a derivative thereof. Castor oil is nominally trifunctional, and is available at reasonable cost. It is also entirely aliphatic, displays excellent hydrophobicity, is biodegradable, and poses few or no toxicological concerns. Other natural or synthetic glycerol or polyglycerol based esters of hydroxyl-functional fatty acids are also useful. Such polyols may be natural products, or may be prepared by esterification of glycerine or polyglycols, or by thermal treatment of glycerol di- and/or triesters. Higher functionality hydrophobic polyols may be prepared by linking polyols such as castor oil with a diacid or equivalent thereto, for example by reacting two moles of castor oil with one mole of maleic acid, maleic anhydride, fumaric acid or a chemical equivalent thereto such as a di(acid chloride), or with a di- or polyisocyanate, preferably an aliphatic diisocyanate. Polyols thus produced will have an average functionality of about 4. Further reaction, or reaction with polybasic acids or polyisocyanates can easily lead to higher functionality polyols.

Polyols prepared substantially from ethylene oxide and propylene oxide, the common precursors for the vast majority of polyurethane grade polyols, are not suitable for use as the hydrophobic polyol component in the subject invention, although such alkylene oxides may be used in conjunction with higher alkylene oxides provided a minimum carbon/oxygen ratio of 4:1 is obtained, or may be used to oxyalkylate a hydrophobic polyol to provide a higher molecular weight product, such as a three mole oxypropylate of castor oil. However, presence of propylene oxide residues, and particularly ethylene oxide residues in the hydrophobic polyols of the invention is not preferred.

Useful hydrophobic polyols may be prepared by oxyalkylating natural or synthetic polyols, amines, or alkanol amines having an average of 2.5 or more active hydrogens per molecule. Lesser functionality "starter" polyols may be used if oxyalkylation is accomplished with substances which provide more than one hydroxyl group following reaction. In other words, the final hydrophobic polyol must have an average functionality of 2.5 or more.

Useful hydrophobic polyols may also be prepared by conventional oxyalkylation techniques and with similar starters as used for conventional urethane polyol production, but with higher alkylene oxides or their equivalents, i.e. 1,2-butylene oxide, 2,3-butylene oxide, tetrahydrofuran, and in particular, α-olefin oxides having 6 to 30 carbon atoms, preferably 8 to 20 carbon atoms , and more preferably 10-18 carbon atoms. Such α-alkylene oxides are commercially available.

Suitable starters include alkanolamines generally, in particular monoalkanolamines, dialkanolamines, and trialkanolamines, where the alkanol groups are C₂-C₃₀, preferably C₂-C₈ alkanol groups, linear or branched; N,N,N' ,N' - tetrakis [2-hydroxyalkyl]alkylene diamines where the alkyl groups are C₂ to C₃₀, preferably C₃-C₂₀ and more preferably C₃-C₄ alkyl groups; monomeric polyols such glycerine, diglycerine, polyglycerols, trimethylolpropane, triethylolpropane, cyclohexane triols, pentaerythritol, mono-, di-, and polysaccharides, and the like. Also suitable as hydrophobic polyols are hydroxyl-terminated polyolefins. The hydrophobic polyol is present in at least 40 weight percent based on the weight of the resin side (less pigments or fillers), preferably greater than 50 weight percent, more preferably greater than 60 weight percent and most preferably greater than 65 weight percent. A weight percentage of 70 - 80 weight percent is particularly useful.

In addition to the hydrophobic polyol of functionality of 2.5 or greater, it is also possible to incorporate minor amounts of lower functionality hydrophobic polyols, i.e. those with functionalities between about 1.7 and 2.5, preferably 2.0 and 2.5, and minor portions, i.e. less than 50% by weight based on the weight of the resin side, of conventional polyurethane grade polyols, particularly polyoxypropylene triols, including those with a oxyethylene caps to raise the primary hydroxyl content and speed reaction time.

The aliphatic resin component optionally and preferably comprises a crosslinker having a functionality of 3.0 or higher, preferably 3.0 to 6.0, and more preferably 3.5 to 5.0. The equivalent weight of the crosslinker is from about 30 Daltons to about 500 Daltons, preferably from about 30 Daltons to 200 Daltons, and most preferably from about 50 Daltons to about 100 Daltons. Suitable crosslinkers include glycerine, trimethylolpropane, triethylolpropane, tetrakis[2-hydroxyalkyl]alkylene diamines, dialkanolamines, trialkanolamines, sorbitol, sucrose, pentaerythritol, and oxyalkylates of such compounds, generally oxyalkylates with from 1 to 2 mols of alklyene oxide per reactive hydrogen. The amount of crosslinker varies inversely with the functionality of the hydrophobic polyol, and directly with the hydrophobic polyol molecular weight, so as to achieve the desired crosslink density and modulus.

It is preferable that the crosslinker be a relatively low molecular weight "monomeric" species, or a one or two mole oxyalkylate thereof. The preferred functionality is about 4, although functionalities of from about 2.5 (average) to about 8, preferably 3 to 6 are also preferred. The lower the molecular weight, the lower the functionality needed to acquire the desired crosslink density. The relative amounts of crosslinker and hydrophobic polyol may be varied to suit particular requirements. Ideally, the amounts are such that the resin side and isocyanate sides of the polyurethane system can be mixed in a ratio from 1:2 to 2:1, preferably 2:3 to 3:2, and most preferably about 1:1. Higher or lower ratios can be used as well.

However, more important than the mix ratio of the two sides is the balance of properties desired. In general, greater amounts of hydrophobic polyol relative to crosslinker will create gel coats which are more flexible but also softer. Flexibility and softness can be adjusted by conventional methods, for example by adding a low molecular weight chain extender such as 1,4-butanediol or 1,6-hexanediol, ethylenediamine, etc., or a higher amount of crosslinker, which generally increases hardness and decreases flexibility.

The isocyanate employed in the gel coat system is preferably an all-aliphatic, isocyanate-terminated prepolymer. The isocyanates used to prepare the prepolymer may be linear aliphatic isocyanates such as 1,4-butanediisocyanate 1,6-hexanediisocyanate, 1,8-octanediisocyanate, and the like, but is preferably a cycloaliphatic isocyanate such as 1-methyl-2,6-diisocycanatocyclohexane, isophorone diisocyanate, or hydrogenated MDI or PMDI. A preferred isocyanate is Desmodur W® isocyanate available from Bayer.

The isocyanate component preferably contains no aromatic isocyanates. However, in some cases, up to 20% of the total isocyanate, preferably up to 10%, and more preferably not more than 5% may be substituted by an aromatic isocyanate such as 4,4'-MDI or modified 4,4'-MDI. Some loss in weathering resistance would be expected to occur. However, the amount may be acceptable. Furthermore, in very highly pigmented gel coats, light absorption and scattering by pigment particles may reduce weathering to acceptable limits.

The isocyanate prepolymer, in general, has a functionality of 2.0 or greater, preferably, 2.5-5.0, more preferably 2.7-4.0 and most preferably about 3. The desired functionality is achieved by reaction of the isocyanate(s) with a low molecular weight polyol or polyol mixture of the desired functionality, the isocyanate being present in stoichiometric excess to ensure isocyanate-group termination. Examples of suitable polyols include glycerine, trimethylolpropane, pentaerythritol, and the like. It is preferred that the aliphatic polyol contain no aromatic moieties. However, minor amounts of such moieties may be present.

The isocyanate prepolymer may also include polyols of lower functionality, i.e. polytetramethylene ether glycols ("PTMEG"), polybutyleneadipate glycols, and the like. However, the overall functionality should be kept above 2.5. The NCO content of the isocyanate is preferably 16 to 30 wt. %, more preferably 18 to 26 wt. %, and most preferably 19 to 24 wt. %

A catalyst is generally required to catalyze the reaction of hydroxyl and isocyanate groups in the overall system. The catalyst may be present in either or both the resin or iso side of the system, however catalysts which cause polymerization of isocyanates, particularly trimerization of isocyanates, are preferably absent from the iso side. Suitable catalysts are well known to those skilled in the art, and include various tin and bismuth compounds, as well as a variety of amines, including especially, tertiary amines. Examples of suitable tin catalysts include the commonly used catalysts such as tin octoate, dioctyltin diacetate, dibutyltin diacetate, dioctyltin dilaurate, dibutyltin dilaurate, etc. Latent catalysts such as nickel acetylacetonate may also be used, particularly when lay up time is expected to be long. The latter may be used in conjunction with more active catalysts as well.

The resin side and iso side are reacted at an iso ratio below 1.09, and preferably about 1.04 to 1.07 as previously indicated. The NCO group content of the isocyanate prepolymer, together with the index at which the resin and iso are reacted produce a coating with little or no foaming, even in hot environments of very high relative humidity. Coatings which exhibit foaming are generally not acceptable, as they cannot produce a high quality surface finish, and may in some cases produce products of diminished strength as well.

The aliphatic gel coat may also contain other ingredients, such as reactive diluents, modifiers, thixotropes, leveling agents, adhesion promoters, mildewcides, fungicides, algicides, and the like. The composition are preferably pigmented. Any conventional pigment may be used, including silicas, titanium dioxide, ground talc, iron oxides, and the like. Organic pigments may also be used. Non-conventional pigments such as metal flakes, liquid crystalline pigments, for example chiral liquid crystalline pigments such as those sold by Wacker-Chemie GmbH as Helicone^{TM} pigments, are also useful. While the compositions may contain solvents in either the resin side, the isocyanate side or both, use of solvents is not desired. When solvents are employed, preferred solvents are those listed which do not cause atmospheric damage such as ozone depletion. One such solvent is methyl acetate.

The aliphatic gel coat is preferably applied in a thickness of 10 to 50 mils, more preferably 20 to 40 mils, and most preferably about 30 mils. One desirable characteristic of the aliphatic gel coats is that their inherent flexibility and strength allow preparation of both thinner gel coats as well as thicker gel coats than conventionally used. In conventional polyester gel coats, thin coats may not provide sufficient strength, while thicker coats may be more prone to damage, particularly stress cracking.

The matrix resin may take essentially the same form, using substantially the same components, as the aliphatic gel coat. However, for reasons of economy, the matrix resin is preferably prepared from an aromatic isocyanate prepolymer rather than one based on aliphatic isocyanates. However, the latter may be used as well. The matrix resin, like the gel coat, is characterized by a high degree of hydrophobicity. However, the matrix resin formulation is somewhat more flexible in this regard, and can tolerate significant amounts of less hydrophobic polyols such as those based on propylene oxide. However, polyols with high oxyethylene content are still preferably avoided. Polyols having a polyoxyethylene cap to provide primary hydroxyl content and hence increased reactivity may be useful.

Both the gel coat and matrix resin may contain chain extenders and other reactive ingredients. Examples of suitable chain extenders include ethylene glycol, diethylene glycol, propylene glycol, dipropylene glycol, 1,4-butanediol, 1,6-hexanediol, and the like. Amino-functional chain extenders are also useful.

The matrix resin isocyanate-functionated prepolymer may have a viscosity which is higher than desired for optimal application properties. In such cases, the prepolymer may be diluted with further isocyanate, preferably liquid, "modified" MDI, or polymeric MDI. For example, the isocyanate component may contain up to 40 weight percent or more of polymeric MDI, although amounts of about 25 weight percent or less are preferred. Modified MDIs include quasi-prepolymers prepared by reacting normally solid 4,4'-MDI with itself or with a minor amount of low molecular weight polyol such as dipropylene glycol to produce a liquid product which still has a relatively low equivalent weight. Such modified MDIs are well known and commercially available.

The gel coat and matrix resin systems may include reactive diluents, for example unsaturated compounds such as 1-decene, glycerol di- and triacrylates, hexanedioldiacrylate, and the like. In such cases, an addition catalyst is preferably included. In addition, the polyol or isocyanate components may contain reactive unsaturation of vinyl, vinyl ether, 1-olefin, allyl, propenyl, isopropenyl, etc. Styrene is preferably absent. Use of unsaturated reactive monomers or diluents is not preferred.

The matrix resin is prepared by combining the resin side and iso side, preferably at the same indices useful for the gel coat resin. If chopped fiberglass is employed, it may be mixed with the matrix resin or a side thereof, and sprayed onto the mold as is conventionally done with unsaturated polyester-based matrix resins.

The general procedure for preparing an article useful in aqueous environments is to apply the gel coat, and following time for an at least partial cure, e.g. to the gel stage, subsequently applying matrix resin and fibrous reinforcement, employing substantially the same methods generally used in the industry for fiber reinforced articles which employ unsaturated polyester resins. In general, application of fibrous reinforcement will be preceded and followed by neat resin, and when felted, mat, or woven reinforcement are employed, hand working with rollers, trowels, and the like to ensure adequate wet out and to remove as many air pockets as possible. However, any method may be used, providing that a sufficient amount of matrix resin is applied to produce a product of the desired resin/reinforcement volume or weight ratio, which may vary from one application to another. For example, in highly stressed articles, a high volume ratio of reinforcement may be desired, whereas in less stressed articles such as floats or hot tubs, lesser reinforcement and comparatively higher amounts of resin may be desired.

Numerous catalysts, isocyanates, polyols, and other polyurethane components are disclosed in U.S. patents all incorporated herein by reference: RE 31,389; 4,603,188; 4,695,618; 5,151,484; 5,166,301; 5,198,508; 5,614,575; 6,046,298; 4,247,676; 4,330,454; 4,584,325; 4,587,323; 4,738,989; 4,742,121; 4,748,192; 6,084,001; 6,274,639; 4,543,366; 4,724,173; 4,748,201; 6,211,259; 2002/0000290.

By the term "residue" is meant a portion of a monomer in a polymer which remains following polymerization. Thus, for example, when an aryl diisocyanate is employed to produce a polyurethane or polyurea, the aryl group may be considered a residue as may also the linking atoms attached thereto which were present also in the diisocyanate. In polyethers, an oxyalkylene group or hydroxyalkylene group (if terminal) may be considered as a residue derived from polymerization of an alkylene oxide, as may also the "included" alkylene group of the oxyalkylene group. Such useage is common in the field of polymers. It should also be noted that the term "functionality" as it pertains to polyols is the theoretical and not the measured functionality. For example, a glycerine-started polyether polyol has a theoretical functionality of 3, whereas the measured (actual) functionality may commonly range from 2.0 to 2.7.

### Example 1

A gel coat was prepared from a resin system consisting of a resin side and iso side. The resin and iso sides are both highly hydrophobic. The resin side is prepared by simply blending the components together. The formulation is presented in Table 1. The iso side is a prepolymer prepared by sequentially reacting an aliphatic isocyanate with the PEP 450 polyol, and then PTMEG. The resin and iso components are mixed in a 1:1 ratio through a spray gun, at an NCO index of approximately 1.07, and applied to a surface representing a female boat hull mold, at a thickness of 30 mils.

**Table 1**

| Aliphatic Resin | | Aliphatic Isocyanate | |
|---|---|---|---|
| Castor Oil | 73 % | Desmodur® W | 89 % |
| Quadrol®¹ | 27% | Pluracol®PEP450² | 10.75% |
| | | Terathane® 1400³ | 0.25% |

| | | | |
|---|---|---|---|
| ¹ N,N,N',N'-tetrakis[2-hydroxypropyl]ethylene diamine | | | |
| ² A pentaerythritol started polyoxypropylene tetrol having a nominal molecular weight of 450. | | | |
| ³ A PTMEG with a nominal molecular weight of 1400. | | | |

Ten minutes following application of the aesthetic gel coat, preparation of the structural components commenced. The components of the matrix resin used are presented in Table 2. As with the gel coat, the resin components were simply blended together, whereas the isocyanate-terminated prepolymer is prepared by sequentially adding and reacting MDI, castor oil, and glycerine polyol. Following reaction, polymeric MDI, having a nominal viscosity of 200 CPS is blended in to lower the viscosity. The resin and ISO are again mixed 1:1 by volume, at a relatively low NCO index, 1.07.

**Table 2**

| Aromatic Resin | | Aromatic Isocyanate | |
|---|---|---|---|
| Castor Oil | 72.43% | Pure MDI | 61.26% |
| Pluracol® PEP 450 | 15.00% | Castor Oil | 11.54% |
| Diethylene Glycol | 4.03% | Multranol® LG 650² | 6.21% |
| Quadrol® | 4.50% | Mondur® MRL | 20.99% |
| TMP1 | 4.03% | | |

| | | | |
|---|---|---|---|
| ¹ Trimethylolpropane | | | |
| ² A glycerine started polyoxypropylene triol | | | |

The first coat applied over the gel coat is a 30 mil coat of matrix resin, followed 10 minutes later by another 30 mil layer, onto which a fiberglass mat was applied and hand rolled to provide adequate wet out. Two further matrix resin applications were applied at 10 minute intervals (30 mils each), the second followed immediately by application of glass mat as before. Onto the mat layup was then sprayed a mixture of matrix resin containing about 30 weight percent chopped glass fibers, followed by another coat of matrix resin, further resin mixed with glass fibers, and ultimately, a final coat of matrix resin. The composite is allowed to cure for 30 minutes, and then parted from the mold surface. The composite measured approximately 12 x 12 x .155 inches (30.5 x 30.5 x .4 cm). The composite was supported at opposite edges and hit strongly with a 10 lb. (∼ 4.5 kg.) hammer. No visual structural damage is observable, and the gel coat remained intact with no chips.

### Example 2

A procedure similar to Example 1 is performed except that the aromatic isocyanate component is replaced by a blend of 93 weight percent Multranol® 4012 and 7 weight percent 4,4'-MDI. Similar result are obtained.

### COMPARATIVE EXAMPLE 1

A composite specimen is prepared similarly to Example 1, but an unsaturated polyester resin is employed. A blow with a 10 lb. hammer caused extensive damage both to the gel coat as well as the structural fiberglass layers. Moreover, significant styrene odor could be detected during preparation of the structure.

### Example 3

The process of Example 1 is followed, but the aliphatic gel coat includes an aliphatic polyol prepared by coupling a 370 hydroxyl number glycerine-started polyoxypropylene polyol with aliphatic diisocyanate Desmodur®W to prepare a polyol with a hydroxyl number of 310.

### Example 4

The process of Example 1 followed, but the aliphatic gel coat includes a resin which is a blend of Voranol® 800 and an aspartic ester of 230 equivalent weight which is a Michael reaction product of 2 mol diethylmaleate to one mol 2-methyl-1,5-diaminopentane. The isocyanate employed is HDI isocyanate.

### Example 5

Chemical resistance is tested and compared against a conventional polyester-based gel coat by immersion in various solvents and solutions. The results are presented in Table 3 below.

**Table 3**

| Test Solution | 10% HCl | 10% acetic acid | 10% NaOH | IPA | TSE |
|---|---|---|---|---|---|
| Inventive Gel Coat | NE | NE | NE | Loss of Gloss | NE |
| Polyester Gel Coat | NE | NE | Yellowing | NE | NE |

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. A curable polyurethane system, comprising
a) a resin comprising minimally 40 weight percent based on the weight of the resin of a hydrophobic and substantially aliphatic polyol having a functionality of 2.5 or more, and optionally an aliphatic crosslinker having a functionality of 3.0 or more, the resin having an average functionality of at least 2.5;
b) an isocyanate component comprising at least one isocyanate-terminated prepolymer of a di- or polyisocyanate with a polyol or polyol mixture, having an average functionality of 2.5 or more; said resin a) and isocyanate component b) reacted at an NCO index of less than 1.09, and having a total functionality of 5.5 or more.

2. The polyurethane system of claim 1, wherein said isocyanate component b) comprises a prepolymer of an aliphatic di- or polyisocyanate or mixture thereof.

3. The polyurethane of claim 2, wherein said resin has a functionality of greater than 3.0 and said isocyanate component has a functionality greater than 2.5.

4. The polyurethane of claim 2, wherein said resin comprises in excess of 50 weight percent castor oil.

5. The polyurethane of claim 2, wherein said isocyanate component comprises a prepolymer of an aliphatic diisocyanate and a polyol or polyol mixture, having an average functionality greater than 2.5.

6. The polyurethane of claim 2, which is substantially free of aromatic moieties.

7. The polyurethane of claim 2 which comprises a gel coat.

8. The polyurethane of claim 7 wherein said gel coat further comprises at least one pigment.

9. The polyurethane of claim 7 which is of sprayable viscosity.

10. The polyurethane of claim 1, wherein said resin has a functionality greater than 3.0, and said isocyanate component comprises a prepolymer of an aromatic di- or polyisocyanate with one or more polyols, and has an average functionality of 2.5 or greater.

11. The polyurethane of claim 10, wherein said isocyanate-terminated prepolymer contains castor oil residues.

12. The polyurethane of claim 10, further comprising a viscosity lowering amount of a liquid di- or polyisocyanate.

13. The polyurethane of claim 10 which is free of aliphatic di- or polyisocyanate residues.

14. The polyurethane of claim 1, comprising
a) a resin side comprising 40-90 % by weight of a hydrophobic polyol having a functionality of 2.5 or more;
a crosslinker having a functionality of 4.0 or more and a molecular weight below 500 daltons, present in an amount up to 20 weight percent, and
b) an iso side comprising an isocyanate component which has a NCO group content of 16 to 28 weight percent, and is the reaction product of an aliphatic di- or polyisocyanate with at least one polyol component having a functionality of 2.5 or more and an equivalent weight below 2000 daltons, and free of aromatic residues.

15. The polyurethane of claim 1, wherein said resin comprises from 60-85 weight percent castor oil, from 10-25 weight percent of a polyol having a functionality of 4.0 to 8.0 and a molecular weight between 300 and 1000 daltons, from 1 to 25 weight percent of one or more polyols having a functionality of 2.0 to 4.0, said resin component having an average functionality greater than 3.0; and an isocyanate component comprising an isocyanate-terminated prepolymer of a stoichiometric excess of one or more isocyanates, of which at least than 50% or more by weight relative to total isocyanate are aromatic isocyanates, from 5-15 % by weight relative to the isocyanate component weight, of a hydrophobic polyol with a functionality of about 3 or more, from 2 to 10 weight percent of a polyoxypropylene polyol having a functionality of about 3 or more; and a viscosity reducing amount of polymeric MDI.

16. The polyurethane of claim 15, wherein said hydrophobic polyol comprises castor oil.

17. The polyurethane of claim 16, which is sprayable.

18. In a process for preparing a fiber-reinforced article to be used in an aqueous environment wherein a composite structure is created by encompassing reinforcing fibers within a curable liquid matrix resin followed by curing, the improvement comprising employing as at least one matrix resin, a polyurethane system of claim 1.

19. In a process for the manufacture of an article for use in an aqueous environment where a gel coat is applied to a mold prior to application of one or more layers of fiber reinforcement in a curable matrix resin, the improvement comprising employing, as said gel coat, the polyurethane of claim 2.

20. An article suitable for use in aqueous environments, comprising
a polyurethane gel coat prepared by reacting
a hydrophobic polyol component with an average functionality greater than 2.5 with an isocyanate prepolymer prepared from one or more aliphatic di- or polyisocyanates and having an average functionality greater than 3.0, and
a fiber reinforced structural layer comprising fibrous reinforcement within a polyurethane matrix comprising a polyurethane system of claim 1.

21. The article of any of claims 18, 19, or 20 which is a boat hull, personal watercraft hull, hot tub, or swimming pool.
